(19) Europäisches Patentamt
European Patent Office
Office européen des brevets

(11) **EP 2 649 714 B1**

(12) **EUROPEAN PATENT SPECIFICATION**

(45) Date of publication and mention
of the grant of the patent:
**14.01.2015 Bulletin 2015/03**

(21) Application number: **11799341.0**

(22) Date of filing: **06.12.2011**

(51) Int Cl.:
*H02M 3/156* (2006.01)  *H02M 3/157* (2006.01)
*H02M 1/00* (2007.01)  *G01R 15/08* (2006.01)
*G01R 15/09* (2006.01)  *G01R 19/165* (2006.01)

(86) International application number:
**PCT/US2011/063508**

(87) International publication number:
**WO 2012/078614 (14.06.2012 Gazette 2012/24)**

(54) **SWITCH-MODE POWER SUPPLY WITH ENHANCED CURRENT SOURCE CAPABILITY**

SCHALTNETZTEIL MIT ERWEITERTEM BETRIEBSBEREICH DER STROMQUELLE

SOURCE D'ALIMENTATION À DÉCOUPAGE AVEC POSSIBILITÉ DE SOURCE DE COURANT OPTIMISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2010 US 961527**

(43) Date of publication of application:
**16.10.2013 Bulletin 2013/42**

(73) Proprietor: **Eaton Corporation
Cleveland, Ohio 44114-2584 (US)**

(72) Inventor: **PAATERO, Esa, Kai
FI-00300 Helsinki (FI)**

(74) Representative: **Wagner, Karl H.
Wagner & Geyer
Gewürzmühlstrasse 5
80538 München (DE)**

(56) References cited:
**DE-A1-102005 035 416    US-A- 6 100 676
US-A1- 2004 178 783    US-A1- 2006 043 960
US-A1- 2008 215 266**

**Description**

FIELD OF THE INVENTION

The present disclosure relates generally to a switch-mode power supply. In particular, the present disclosure relates to a switch-mode power supply with enhanced current source capability.

BACKGROUND

Conventional switch-mode power supply control circuits measure actual inductor current or an equivalent current in the circuit. The measured current is scaled to be within a measurement range corresponding to a predetermined measurement resolution and scaling for the control circuitry. The control circuitry typically cannot detect current measurements outside of the measurement range. For example, current measurements outside of the measurement range may get clipped.

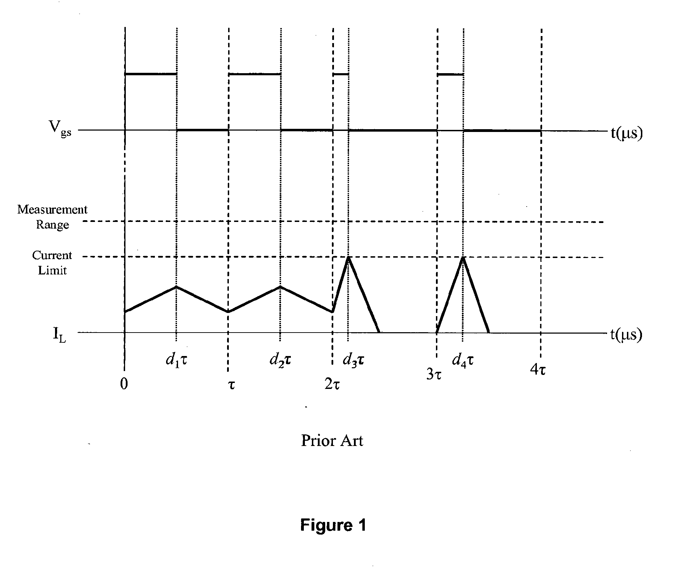

**Figure 1** illustrates exemplary switch control voltage $V_{gs}$ (e.g., gate-source voltage, base-emitter voltage, and so on) and inductor current $I_L$ waveforms for a typical switch-mode power supply.

The current limit threshold for a conventional switch-mode power supply such as one producing the exemplary waveforms of **Figure 1** is set within the measurement range so that the control circuitry can measure the actual inductor or equivalent current and react to the current increasing beyond the current limit threshold.

In reference to the waveforms of **Figure 1,** at time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

At the beginning of the third cycle, at time $2\tau$, the switch turns on and the inductor currents ramps up steeply. The steep rise in the inductor current may be due to a fault (e.g., short circuit, overload, and so on) connected to the output of the switch-mode power supply. At $d_3\tau$ the inductor current reaches the current limit threshold and the switch turns off. With the switch off, the inductor current ramps down. The switch turns back on at time $3\tau$ when once again the inductor current rises rapidly until it hits the current limit threshold at $d_4\tau$ when the switch turns off and the inductor current ramps down.

As can be seen from **Figure 1,** once the inductor current reaches the current limit threshold, the switch is turned off at $d_3\tau$ and $d_4\tau$ limiting the amount of current available to clear the fault (e.g., blow a fuse, trip a circuit breaker, and so on).

It may be desirable for the power supply to increase the current limit threshold to source additional current to the output during fault conditions to clear the fault. However, sourcing additional current to the output would conventionally require increasing the measurement range so that the higher current limit threshold remains within the measurement range. Increasing the scale of the measurement range would cause a loss of resolution in the measurement.

Documents US 2004178783 and US 6100676 propose to estimate the inductor currents in their switch-mode power supplies and to regulate the currents within the nominal operating ranges.

SUMMARY

The invention is defined by the features of device claim 1 and method claim 11. The dependent claims recite advantageous embodiments of the invention.

BRIEF DESCRIPTION OF THE DRAWINGS

The accompanying drawings, which are incorporated in and constitute a part of the specification, illustrate various exemplary systems, methods, and so on, that illustrate various exemplary embodiments of aspects of the invention. A person of ordinary skill in the art will appreciate that the illustrated boundaries of components in the figures represent one example of the boundaries. A person of ordinary skill in the art will also appreciate that one component may be designed as multiple components or that multiple components may be designed as a single component. Additionally, an internal component may be implemented as an external component and vice versa. Further, the figures may be drawn not to scale and the proportions of certain parts may be exaggerated for convenience of illustration.

**Figure 1** illustrates exemplary switch control voltage and inductor current waveforms for a conventional switch-mode power supply.

**Figure 2** illustrates a block diagram of an exemplary switch-mode power supply with enhanced current source capability.

**Figure 3** illustrates a circuit diagram of the exemplary switch-mode power supply with enhanced current source capability.

**Figure 4** illustrates an exemplary method of controlling a switch-mode power supply.

**Figure 5** illustrates exemplary switch control voltage and inductor current waveforms for a switch-mode power supply with enhanced current source capability.

**Figure 6** illustrates exemplary switch control voltage and inductor current waveforms for a switch-mode power supply with enhanced current source capability where the switch is turned back on at the beginning of a new switching cycle.

**Figure 7** illustrates exemplary switch control voltage and inductor current waveforms for a switch-mode power supply with enhanced current source capability where the switch is turned back on at the beginning of a new switching cycle with the inductor current above the measurement range.

**Figure 8** illustrates exemplary switch control voltage and inductor current waveforms for a switch-mode power supply with enhanced current source capability where the switch is turned back on at the beginning of a new switching cycle after the inductor current reaches zero.

**Figure 9** illustrates exemplary switch control voltage and inductor current waveforms for a switch-mode power supply with enhanced current source capability where the switch is turned back on when the inductor current reaches a threshold (e.g., hysteresis) below the new current limit threshold.

**Figure 10** illustrates exemplary switch control voltage and inductor current waveforms for a switch-mode power supply with enhanced current source capability where the switch turns off after the inductor current reaches the new current limit threshold regardless of the switching cycle.

## DETAILED DESCRIPTION

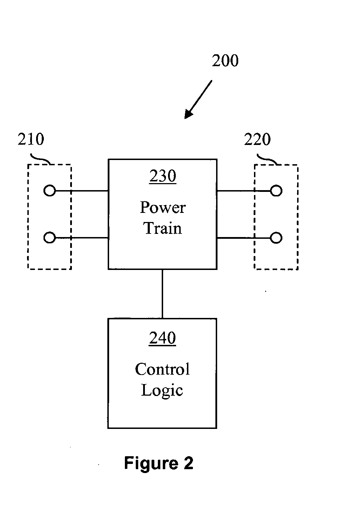

**Figure 2** illustrates a block diagram of an exemplary switch-mode power supply 200 with enhanced current source capability. The power supply 200 includes an input port 210 and an output port 220. In one embodiment (not shown), the input port 210 connects to a source, while the output port 220 connects to a load. The power supply 200 also includes a power train 230 operably connected to the input port 210 and the output port 220. The power supply 200 further includes a control logic 240 operably connected to the power train 230 and configured to control the power train 230.

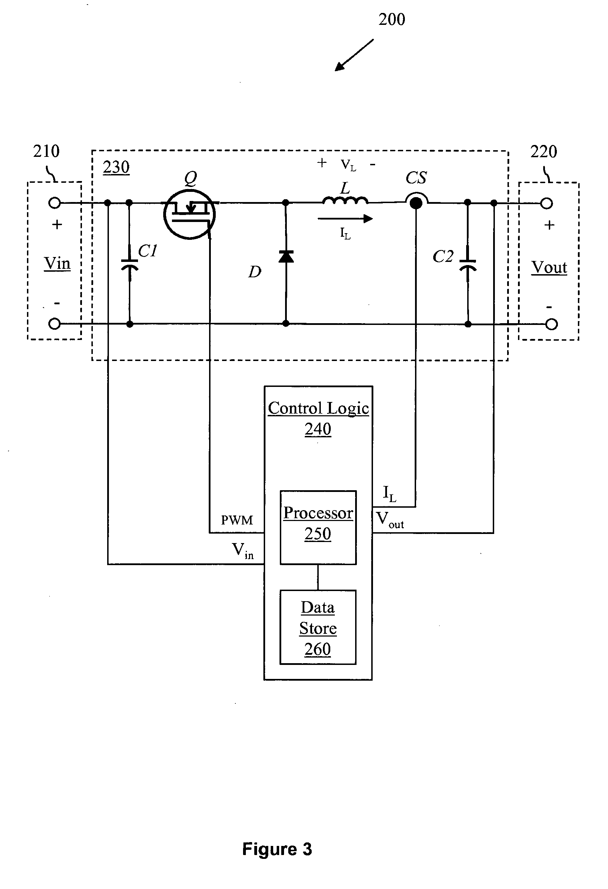

**Figure 3** illustrates a circuit diagram of the exemplary switch-mode power supply 200 with enhanced current source capability. For purposes of illustration, the power supply 200 is shown as a DC-DC converter including a power train 230 configured in a buck topology. However, the power supply 200 may be any type of switch-mode power supply or converter including, but not limited, to AC-DC converters, DC-AC converters, AC-AC converters, boost, forward, flyback, buck-boost, push-pull, half bridge, full bridge converters, uninterruptible power supplies (UPS), and so on.

The power supply 200 includes the input port 210 and the output port 220. The power supply 200 also includes the power train 230 operably connected to the input port 210 and the output port 220.

In the illustrated embodiment, the power train 230 includes an input capacitor $C1$, a switch $Q$, a diode $D$, an inductor $L$, a current sensor $CS$, and an output capacitor C2 configured in a buck topology. In one embodiment (not shown), the power train includes a different number of the illustrated components. For example, the power train may include more than one inductor, switch or diode, or the power train may include more or less than two capacitors. In another embodiment (not shown), one or more inductors may not be discrete components, but instead may be part of other components (e.g., flyback transformer, and so on).

In the illustrated embodiment, the current sensor $CS$ is connected in series with the inductor $L$. In another embodiment (not shown), the current sensor is located elsewhere in the circuit where inductor current or equivalent may be measured. In one embodiment (not shown), the power train includes more than one current sensor, while in another embodiment (not shown), the power train does not include a current sensor.

The power supply 200 further includes the control logic 240 operably connected to the power train 230 and configured to control the power train 230. The control logic periodically calculates current through inductor $L$ and controls operation of the power train 230 by switching the switch $Q$ based at least in part on the calculated current.

The control logic 240 includes a processor 250 and a data store 260 in communication with the processor 250.

The data store 260 stores data representing circuit and component parameters.

Circuit parameters include, but are not limited to, prior or current operating conditions of the power supply 200 including prior or current on/off state of the switch $Q$, switching frequency, input voltage, output voltage, temperature (e.g., ambient, component, a temperature inside an enclosure of the switch-mode power supply, etc.), prior or current load current, maximum load, and so on.

Component parameters include, but are not limited to, parameters of the switch $Q$ including on resistance, total energy capability, rise and fall times, safe operating area, thermal resistance, conduction losses, switching losses, maximum die temperature, and so on. Component parameters may further include known parameters of the printed circuit boards, circuit enclosures, and so on. Component parameters further include the inductance of the inductor $L$ in and out of saturation.

The processor 250 calculates inductor current based at least in part on the data stored in the data store 260. Based on the calculated inductor current, the processor 250 issues signals that control the switching of the switch $Q$.

Inductor Current Calculation

The change $dI_L$ in the current $I_L$ through the inductor $L$ is a function of the voltage $V_L$ across the inductor, the inductance of the inductor $L$, and the conduction time or pulse width $dt$ of the PWM signal to switch $Q$.

$$dI_L = \frac{V_L}{L} dt \qquad \qquad \textbf{Eq. 1}$$

In one embodiment, the voltage $V_L$ across the inductor $L$ is known. In another embodiment, the voltage $V_L$ across the inductor $L$ is measured. In yet another embodiment, the voltage $V_L$ across the inductor $L$ is calculated based on measured or known quantities. In the illustrated embodiment, the control logic 240 measures the source voltage $Vin$ and the output voltage $Vout$. The measured values are stored in the data store 260. The processor 250 calculates the voltage across the inductor $V_L$ from the measured values of the source voltage $Vin$ and the output voltage $Vout$. The determination of the voltage $V_L$ will vary depending on the circuit topology and specific circuit configuration.

The inductance of inductor $L$ is determined based in part on the magnetization curve of the chosen inductor $L$. In one embodiment, the inductor $L$ has a predictable inductance in and out of saturation. An example of an inductor having such predictable behavior includes, but is not limited to, the inductor disclosed in US Patent No.: 7,205,875 to Oughton, Jr. et al. Such an inductor has stable and predicable inductance values in and out of saturation, which simplifies the inductance calculation. In another embodiment, the inductor $L$ is any inductor for which the magnetization curve is known. From the known magnetization curve, the inductance is determined.

The pulse width $dt$ or conduction time of the switch $Q$ is known to the control logic 240 since the processor 250 provides the PWM signal that controls the pulse width $dt$ or conduction time of the switch $Q$.

In one embodiment, the control logic 240 calculates inductor current $I_L$ only when the inductor current as measured by current sensor $CS$ exceeds the measurement range. In another embodiment, the control logic 240 calculates inductor current $I_L$ periodically regardless of whether the inductor current as measured by current sensor $CS$ exceeds the measurement range. In one embodiment (not shown), the power train 230 does not include the current sensor $CS$ and the control logic 240 does not measure, but only calculates the inductor current $I_L$.

Current Limit Threshold

The control logic 240 controls the operation of the power train 230 at least in part by switching the switch $Q$ off based on the calculated current through the inductor $L$ rising to reach or exceed a current limit threshold. The current limit threshold may be predetermined or calculated.

In one embodiment, the current limit threshold is a predetermined threshold within the current measurement range of the control logic 240. In another embodiment, the current limit threshold is a predetermined threshold outside the current measurement range of the control logic 240.

In one embodiment, the current limit threshold is calculated. In another embodiment, the current limit threshold is calculated periodically and so it varies dynamically based on circuit and component parameters.

In one embodiment, the current limit threshold is calculated based on an operating profile. For example, a user may indicate an operating profile based on a desired maximum output current. In another example, the operating profile is factory chosen based on circuit component parameters such as component parameters relating to the switch $Q$.

Methodology

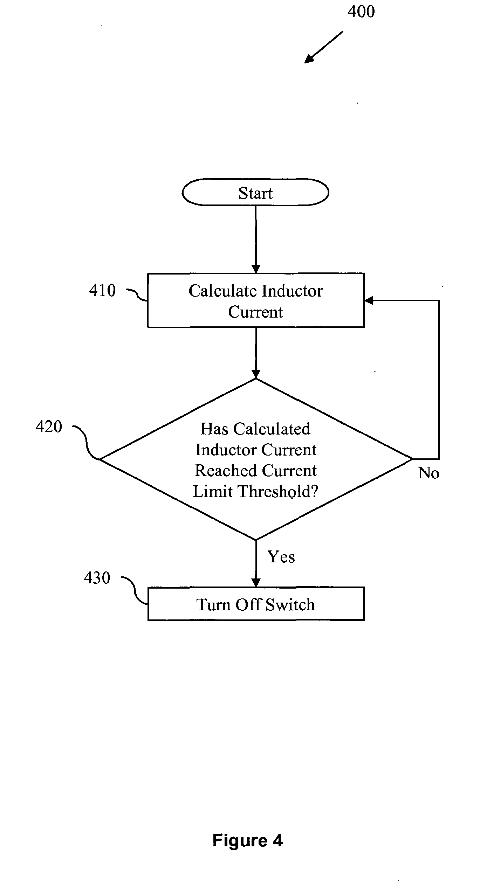

Example methods may be better appreciated with reference to the flow diagrams of **Figure 4.** While for purposes of simplicity of explanation, the illustrated methodologies are shown and described as a series of blocks, it is to be appreciated that the methodologies are not limited by the order of the blocks, as some blocks can occur in different orders or concurrently with other blocks from that shown or described. Moreover, less than all the illustrated blocks may be required to implement an example methodology. Furthermore, additional or alternative methodologies can employ additional, not illustrated blocks.

In the flow diagrams, blocks denote "processing blocks" that may be implemented with logic. The processing blocks may represent a method step or an apparatus element for performing the method step. A flow diagram does not depict syntax for any particular programming language, methodology, or style (e.g., procedural, object-oriented). Rather, a flow diagram illustrates functional information one skilled in the art may employ to develop logic to perform the illustrated processing. It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown or that blocks may be combined or separated into multiple components. It will be appreciated that the processes may be implemented using various hardware approaches as well as various programming approaches like machine language, procedural, object oriented or artificial intelligence techniques.

In one example, methodologies are implemented as processor executable instructions or operations provided on a data store. Thus, in one example, a data store may store processor executable instructions operable to perform the method of **Figure 4.**

While **Figure 4** illustrates various actions occurring in serial, it is to be appreciated that various actions illustrated in **Figure 4** could occur substantially in parallel. While a number of processes are described, it is to be appreciated that a greater or lesser number of processes could be employed and that lightweight processes, regular processes, threads, and other approaches could be employed. It is to be appreciated that other example methods may, in some cases, also include actions that occur substantially in parallel.

**Figure 4** illustrates a method 400 for controlling a switch-mode power supply including at least one switch and one inductor. With the switch on, at 410, the method 400 periodically calculates inductor current. At 420, the method 400 determines whether the calculated inductor current has reached a current limit threshold. If the calculated inductor current has reached the current limit threshold, at 430, the method 400 turns off the switch.

In one embodiment, the switch is turned back on based on the calculated inductor current decreasing below a threshold. Example thresholds include a threshold corresponding to a hysteresis of the current limit threshold, the upper limit of the current measurement range, the inductor current reaching zero, and so on.

In one embodiment, the method determines the current limit threshold based on circuit and component parameters. In this embodiment, the method includes receiving data representing parameters of the switch-mode power supply and determining the current limit threshold based at least in part on the data representing the parameters of the circuit and components of the switch-mode power supply.

In another embodiment, the method determines the current limit threshold based on prior or current operating state of the switch-mode power supply. In this embodiment, the method includes receiving data representing at least one of prior and current operating state of the switch-mode power supply, and determining the current limit threshold based at least in part on the data representing the at least one of prior and current operating state of the switch-mode power supply. Prior and current operating state of the switch-mode power supply prior include, but are not limited to, current or previous on/off state of the at least one switching device, switching frequency of the switch-mode power supply, current or prior output voltage of the switch-mode power supply, current or prior output load of the switch-mode power supply, and so on.

In one embodiment, the method determines the current limit threshold based on a user selected profile. In this embodiment, the method includes receiving data representing a user-selected current profile, and determining the current limit threshold based at least in part on the data representing the user-selected current profile.

In another embodiment, the method determines the current limit threshold based on a factory selected profile. In this embodiment, the method includes receiving data representing a factory selected current profile, and determining the current limit threshold based at least in part on the data representing the factory selected current profile.

Enhanced Current Source Capability

Calculating the inductor current allows the power supply to source higher output relative to the conventional measured inductor current set up where the inductor current must be within the current measurement range for the control logic to capture. In a power supply where the inductor current is calculated instead of measured, a higher, new current limit threshold may be set above the measurement range so that maximum output current may be sourced to

**5**

the fault.

In one embodiment, the switch is turned off on a cycle by cycle basis or when the inductor current reaches the new current limit threshold. In another embodiment, the switch does not turn off on a cycle by cycle basis, but instead the switch turns off when the inductor current reaches the new current limit threshold.

The time at which the switch is turned back on may vary. For example, the switch may be turned back on when the inductor current reaches zero, when the inductor current is below the new current limit minus some hysteresis, when the inductor current is below the new current limit but still above the measurement range, when the inductor current is below the new current limit and in measurement range, at the beginning of a new switching cycle, at the beginning of a new switching cycle after the inductor current reaches zero, and so on.

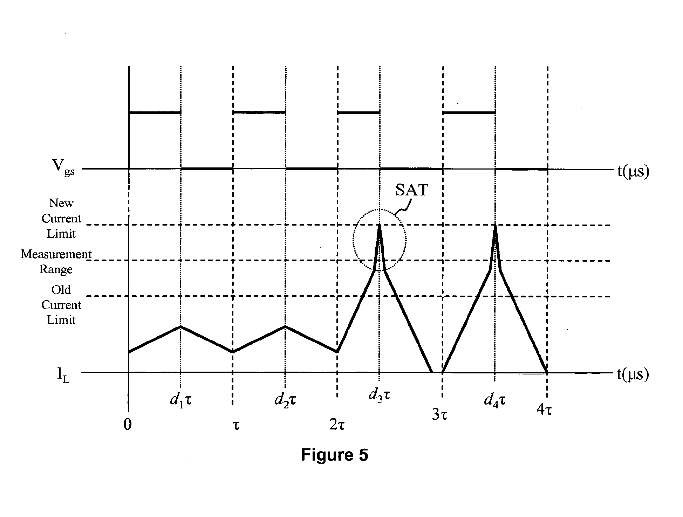

**Figure 5** illustrates exemplary switch control voltage $V_{gs}$ (e.g., gate-source voltage, base-emitter voltage, and so on) and inductor current $I_L$ waveforms for a switch-mode power supply with enhanced current source capability.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor current also reaches and goes beyond saturation SAT of the inductor where the slope of the inductor current rises even faster. The inductor current also reaches and goes beyond the measurement range beyond which the control logic could not measure the inductor current. Eventually, at $d_3\tau$ the calculated inductor current reaches the new current limit threshold and the switch is turned off.

With the switch off, the inductor current ramps down all the way to zero. The switch does not turn back on until the beginning of the next cycle at time $3\tau$ when once again the inductor current rises rapidly until it hits the new current limit threshold at $d_4\tau$. At $d_4\tau$ the switch turns off and the inductor current ramps down.

The actual inductor current closely resembles the calculated inductor current. Thus, the actual current available has increased by the difference between the old current limit threshold and the new current limit threshold. The increased current is available to clear the fault.

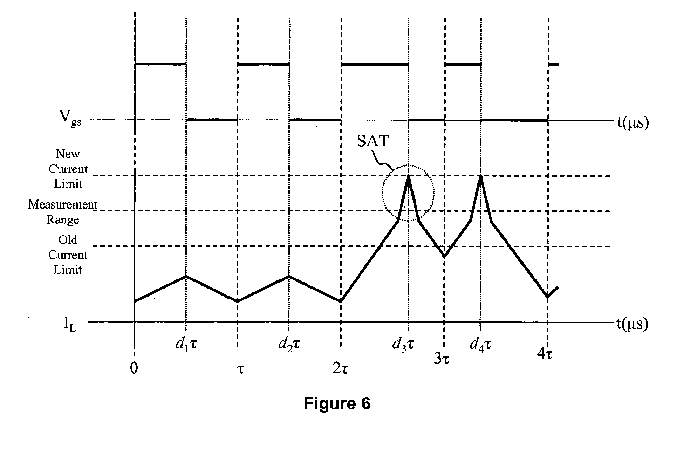

Figure 6 illustrates exemplary switch control voltage $V_{gs}$ (e.g., gate-source voltage, base-emitter voltage, and so on) and inductor current $I_L$ waveforms for a switch-mode power supply with enhanced current source capability where the switch is turned back on at the beginning of a new switching cycle once the inductor current is back within the measurement range.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor current also reaches and goes beyond saturation SAT of the inductor where the slope of the inductor current rises even faster. The inductor current also reaches and goes beyond the measurement range beyond which the control logic could not measure the inductor current. Eventually, at $d_3\tau$ the calculated inductor current reaches the new current limit threshold and the switch is turned off.

With the switch off, the inductor current ramps down. The switch turns back on at the beginning of the new cycle at time $3\tau$ where the inductor current is not yet zero, but the inductor current is back within the measurement range. Once again the inductor current rises rapidly until it hits the new current limit threshold at $d_4\tau$. At $d_4\tau$ the switch turns off and the inductor current ramps down. The switch turns back on at time $4\tau$ even though the inductor current is not yet zero.

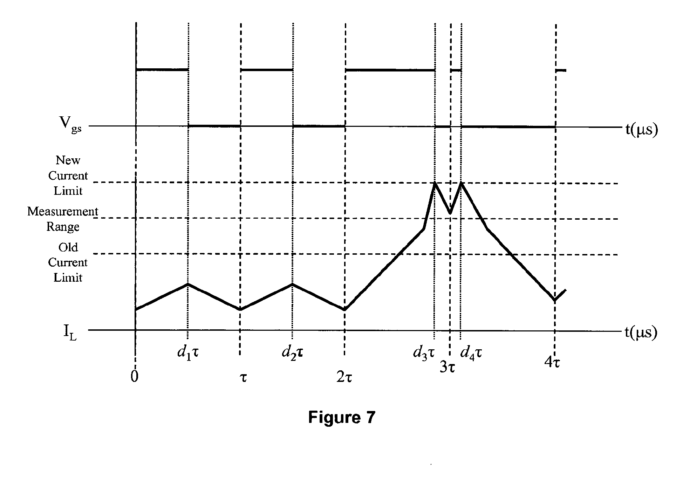

**Figure 7** illustrates exemplary switch control voltage $V_{gs}$ (e.g., gate-source voltage, base-emitter voltage, and so on) and inductor current $I_L$ waveforms for a switch-mode power supply with enhanced current source capability where the switch is turned back on at the beginning of a new switching cycle even though the inductor current remains above the measurement range and the old current limit.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor

6

current also reaches and goes beyond saturation of the inductor where the slope of the inductor current rises even faster. The inductor current also reaches and goes above the measurement range outside of which the control logic could not measure the inductor current. Eventually, at $d_3\tau$ the calculated inductor current reaches the new current limit threshold and the switch is turned off.

With the switch off, the inductor current ramps down. The switch turns back on at time $3\tau$ at the beginning of the new cycle even though the inductor current is not yet zero and even though the inductor current is still outside of the measurement range. Once again the inductor current rises rapidly until it hits the new current limit threshold at $d_4\tau$. At $d_4\tau$ the switch turns off and the inductor current ramps down. The switch turns back on at time $4\tau$ at the beginning of the new cycle even though the inductor current is not yet zero, although this time the inductor current is inside measurement range.

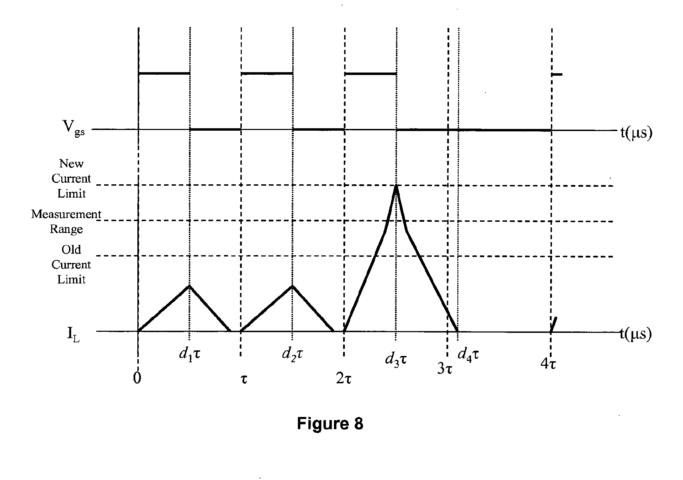

**Figure 8** illustrates exemplary switch control voltage $V_{gs}$ (e.g., gate-source voltage, base-emitter voltage, and so on) and inductor current $I_L$ waveforms for a switch-mode power supply with enhanced current source capability where the switch is turned back on at the beginning of a new switching cycle after the inductor current reaches zero.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor current also reaches and goes beyond saturation of the inductor where the slope of the inductor current rises even faster. The inductor current also reaches and goes above the measurement range outside of which the control logic could not measure the inductor current. Eventually, at $d_3\tau$ the calculated inductor current reaches the new current limit threshold and the switch is turned off.

With the switch off, the inductor current ramps down. The switch does not turn back on at time $3\tau$ at the beginning of the new cycle because inductor current has not yet reached zero. At $d_4\tau$ inductor current reaches zero. The switch turns back on at time $4\tau$ at the beginning of the new cycle after the inductor current reaches zero. In one embodiment (now shown), the switch turns back on after the inductor current reaches zero before the beginning of what would have been a new cycle.

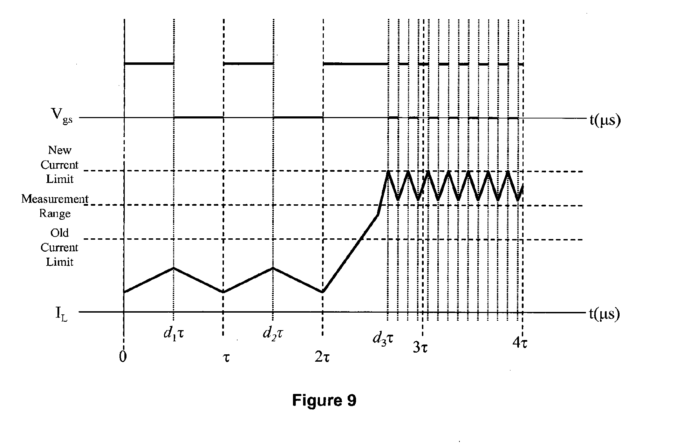

**Figure 9** illustrates exemplary switch control voltage $V_{gs}$ (e.g., gate-source voltage, base-emitter voltage, and so on) and inductor current $I_L$ waveforms for a switch-mode power supply with enhanced current source capability where the switch is turned back on when the inductor current reaches some threshold (e.g., hysteresis) below the new current limit threshold even though the inductor current remains above the measurement range and the old current limit.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor current also reaches and goes beyond saturation of the inductor where the slope of the inductor current rises even faster. The inductor current also reaches and goes above the measurement range outside of which the control logic could not measure the inductor current. Eventually, at $d_3\tau$ the calculated inductor current reaches the new current limit threshold and the switch is turned off.

With the switch off, the inductor current ramps down until the inductor current reaches a level that is deemed safe for operation (e.g., current limit hysteresis). At that point, the switch turns back on even though the inductor current is not yet zero and even though the inductor current is still above the measurement range. Once again the inductor current rises rapidly until it hits the new current limit threshold. The cycle continues until the fault clears or until the control logic determines based on circuit parameters that the new current limit threshold should be lowered to protect the circuit from damage (e.g., overcurrent, overheating, and so on) or that the switch should otherwise be turned off. In this example, the switching frequency may vary depending on the new current limit threshold, the hysteresis, the fault current, and so on.

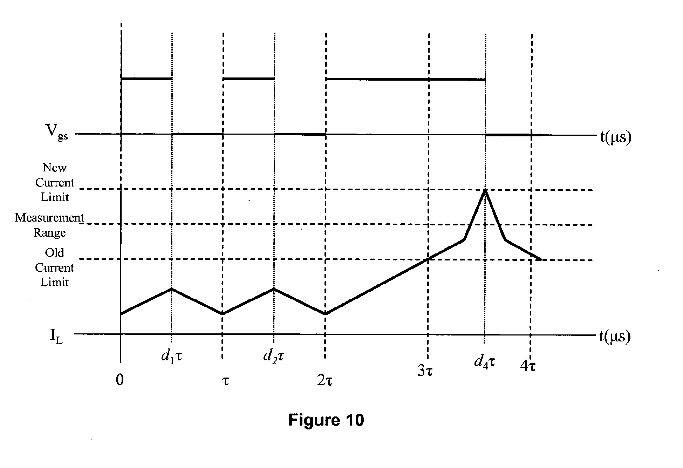

**Figure 10** illustrates exemplary switch control voltage $V_{gs}$ (e.g., gate-source voltage, base-emitter voltage, and so on) and inductor current $I_L$ waveforms for a switch-mode power supply with enhanced current source capability where the switch does not turn off until the inductor current reaches the new current limit threshold.

At time zero the switch turns on and the inductor current ramps up. The switch remains on for the duration of the duty cycle until at $d_1\tau$ when the switch turns off and the inductor current ramps down. The second cycle is similar to the first. At time $\tau$ the switch turns on and the inductor current ramps up. The switch remains on for the duration of the duty cycle until at $d_2\tau$ when the switch turns off and the inductor current ramps down.

On the third cycle, at time $2\tau$, the switch turns on and the inductor currents ramps up steeply. The steep rise in the inductor current may be due to a fault (e.g., short circuit, overload, and so on) connected to the output of the switch-mode power supply. The inductor current reaches and goes beyond the old current limit threshold. The inductor current is allowed to keep rising past time $3\tau$ where a new cycle would have otherwise started. The inductor current also reaches and goes beyond saturation of the inductor where the slope of the inductor current rises even faster. The inductor current also reaches and goes above the measurement range outside of which the control logic could not measure the inductor current. Eventually, at $d_4\tau$ the calculated inductor current reaches the new current limit threshold and the switch is turned off.

With the switch off, the inductor current ramps down. The switch maybe turned back on when the inductor current reaches some safe threshold outside or within the measurement range, when the inductor current reaches zero, or at the beginning of a new cycle. In this example, the switching frequency may vary depending on the new current limit threshold, the fault current, and so on.

In the above examples, since the actual inductor current closely resembles the calculated inductor current, significant additional actual current, the difference between the old current limit threshold and the new current limit threshold, is available to clear the fault.

Definitions

"Data store," as used herein, refers to a physical or logical entity that can store data. A data store may be, for example, a database, a table, a file, a list, a queue, a heap, a memory (RAM., ROM, flash, and so on), a hard drive, a register, and so on. A data store may reside in one logical or physical entity or may be distributed between two or more logical or physical entities.

"Logic," as used herein, includes but is not limited to hardware, firmware, software or combinations of each to perform function or action, or to cause a function or action from another logic, method, or system. For example, based on a desired application or needs, logic may include a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics.

An "operable connection," or a connection by which components are "operably connected," is one by which the operably connected components or the operable connection perform its intended purpose. For example, two components may be operably connected to each other directly or through one or more intermediate components. An "operable connection," or a connection by which components are "operably connected," is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. In another example, two components can be operably connected by being able to communicate signals to each other directly or through one or more intermediate components such as a conductor, a wire, a processor, a logic, an operating system, or other component.

A "processor," as used herein, includes, but is not limited to, microprocessors, microcontrollers, digital signal processors (DSP), dual microprocessors, and other multiprocessor architectures.

"Signal," as used herein, includes but is not limited to one or more electrical or optical signals, analog or digital signals, data, one or more computer or processor instructions, messages, a bit or bit stream, or other means that can be received, transmitted or detected.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or multiple components.

While the present disclosure illustrates various embodiments, and while these embodiments have been described in some detail, it is not the intention of the applicant to restrict or in any way limit the scope of the claimed invention to such detail. Additional advantages and modifications will readily appear to those skilled in the art within the scope of the appended claims.

**Claims**

1.  A switch-mode power supply (200) comprising:

    an input port (210);
    an output port (220);
    a power train (230) operably connected to the input port (210) and the output port (220), where the power train (230) includes at least one inductor (L) and at least one switching device (Q); and
    a control logic (240) configured to periodically calculate an equivalent current to current through the at least one inductor (L) and further configured to control operation of the power train (230) at least in part by switching the at least one switching device (Q) based at least in part on the calculated equivalent current;
    where the control logic (240) is configured to cause the at least one switching device (Q) to switch off based on the calculated current reaching or exceeding a current limit threshold which is set above a current measurement range of the control logic (240) and to cause the at least one switching device (Q) to switch on based at least in part on the calculated current decreasing below a second threshold corresponding to a hysteresis of the current limit threshold.

2.  The switch-mode power supply (200) of claim 1, where the control logic (240) is configured to calculate the equivalent current based in part on a magnetizing curve corresponding to the at least one inductor (L).

3.  The switch-mode power supply (200) of claim 1, where the control logic(240) is configured to calculate the equivalent current based in part on at least one of:

    inductance of the at least one inductor (L); and
    inductance in saturation of the at least one inductor (L).

4.  The switch-mode power supply (200) of claim 1, where the control logic (240) is configured to calculate the current limit threshold based on at least one of:

    component parameters of components of the power train (230),
    at least one of prior and current operating conditions of the power train (230), and
    a current profile.

5.  The switch-mode power supply (200) of claim 4, where the component parameters include at least one of:

    on resistance of the at least one switching device (Q);
    total energy capability of the at least one switching device (Q);
    rise time of the at least one switching device (Q);
    fall time of the at least one switching device (Q);
    safe operating area of the at least one switching device (Q);
    thermal resistance of the at least one switching device (Q);
    conduction losses of the at least one switching device (Q); and
    switching losses of the at least one switching device (Q).

6.  The switch-mode power supply (200) of claim 4, where the at least one of prior and current operating conditions includes at least one of:

    prior on/off state of the at least one switching device (Q),
    current on/off state of the at least one switching device (Q),
    switching frequency of the at least one switching device (Q),
    output voltage of the power train (230),
    ambient temperature,
    temperature of the at least one switching device (Q),
    a temperature inside an enclosure of the switch-mode power supply (200),
    prior output load of the power train (230), and
    current output load of the power train (230); and/or
    where the current profile includes at least one of:

a user selected current profile, and
a factory selected current profile.

7. The switch-mode power supply (200) of claim 1, wherein the control logic (240) comprises:

a data store (260) configured to store data; and
a processor (250) configured to calculate the equivalent current based at least in part on the stored data.

8. The switch-mode power supply (200) of claim 7, where the stored data includes:

voltage across the at least one inductor (L),
a parameterized magnetizing curve corresponding to the at least one inductor (L), and
on time of the at least one switching device (Q), and

where the processor (250) is configured to calculate the equivalent current based at least in part on the voltage across the at least one inductor (L), the parameterized magnetizing curve corresponding to the at least one inductor (L), and the on time of the at least one switching device (Q):

9. The switch-mode power supply of claim 7, where the processor (250) is configured to cause the switching of the at least one switching device at a frequency based at least in part on the calculated current.

10. The switch-mode power supply of claim 7, where the processor (250) is configured to cause the at least one switching device (Q) to switch off based on the calculated current reaching or exceeding the current limit threshold above the processor's current measurement range and to cause the at least one switching device (Q) to switch on based at least in part on the calculated current decreasing below a second threshold, which is above or below the processor's current measurement range.

11. A method (400) of controlling a switch-mode power supply (200), the method comprising:

calculating (410) inductor current through at least one inductor (L) in the switch-mode power supply (200);
switching (430) at least one switching device (Q) off based on the calculated inductor current reaching a current limit threshold which is set above a current measurement range of the control logic (240); and
switching the at least one switching device (Q) on based on the calculated inductor current being below a second threshold corresponding to a hysteresis of the current limit threshold.

12. The method of claim 11, further comprising:

receiving data representing at least one of:

(a) parameters of components of the switch-mode power supply, and
(b) one or more of prior and current operating state of the switch-mode power supply; and

determining the current limit threshold based on the received data.

13. The method of claim 12, where the one or more of at least one of the prior and current operating conditions of the switch-mode power supply includes at least one of:

prior on/off state of the at least one switching device,
current on/off state of the at least one switching device,
switching frequency of the switch-mode power supply,
output voltage of the switch-mode power supply,
temperature of the at least one switching device, ambient temperature,
a temperature inside an enclosure of the switch-mode power supply,
prior output load of the switch-mode power supply, and
current output load of the switch-mode power supply.

14. The method of claim 12,

where the parameters of the components include at least one of on resistance of the at least one switching device, total energy capability of the at least one switching device, rise time of the at least one switching device, fall time of the at least one switching device, safe operating area of the at least one switching device, thermal resistance of the at least one switching device, conduction losses of the at least one switching device, and switching losses of the at least one switching device, inductance of the at least one inductor.

15. The method of claim 11, further comprising:

receiving data representing a user-selected current profile; and
determining the current limit threshold based at least in part on the data representing the user-selected current profile, and/or comprising:

receiving data representing a factory selected current profile; and
determining the current limit threshold based at least in part on the data representing the factory selected current profile.


**Patentansprüche**

1. Ein Schaltnetzteil (200), das Folgendes aufweist:

einen Eingangsanschluss (210);
einen Ausgangsanschluss (220);
einen Leistungsstrang (230), die betriebsmäßig mit dem Eingangsanschluss (210) und dem Ausgangsanschluss (220) verbunden ist, wobei der Leistungsstrang (230) mindestens eine Induktivität (L) und mindestens eine Schalteinrichtung (Q) aufweist; und
eine Steuerlogik (240), die konfiguriert ist zum periodischen Berechnen eines äquivalenten Stroms zum Strom durch die mindestens eine Induktivität (L) und ferner konfiguriert ist zum Steuern des Betriebs des Leistungsstrangs (230), zumindest teilweise, durch Schalten der mindestens einen Schalteinrichtung (Q) basierend, zumindest teilweise, auf dem berechneten äquivalenten Strom;
wobei die Steuerlogik (240) konfiguriert ist zum Veranlassen, die mindestens eine Schalteinrichtung (Q) auszuschalten, und zwar basierend darauf, dass der berechnete Strom einen Strombegrenzungsschwellenwert erreicht oder überschreitet, der oberhalb eines Strommessbereichs der Steuerlogik (240) gesetzt ist, und zum Veranlassen, die mindestens eine Schalteinrichtung (Q) einzuschalten, und zwar zumindest teilweise basierend darauf, dass der berechnete Strom unter einen zweiten Schwellenwert entsprechend einer Hysterese des Strombegrenzungsschwellenwerts sinkt.

2. Schaltnetzteil (200) nach Anspruch 1, wobei die Steuerlogik (240) konfiguriert ist zum Berechnen des äquivalenten Stroms zumindest teilweise basierend auf einer Magnetisierungskurve entsprechend der mindestens einen Induktivität (L).

3. Schaltnetzteil (200) nach Anspruch 1, wobei die Steuerlogik (240) konfiguriert ist zum Berechnen des äquivalenten Stroms basierend, zumindest teilweise, auf einem der Folgenden:

Induktanz der mindestens einen Induktivität (L); und
Induktanz bei Sättigung der mindestens einen Induktivität (L).

4. Schaltnetzteil (200) nach Anspruch 1, wobei die Steuerlogik (240) konfiguriert ist zum Berechnen des Strombegrenzungsschwellenwerts basierend auf mindestens einem der Folgenden:

Komponentenparameter von Komponenten des Leistungsstrangs (230),
vorherigen und/oder aktuellen Betriebsbedingungen des Leistungsstrangs (230), und
einem Stromprofil.

5. Schaltnetzteil (200) nach Anspruch 4, wobei die Komponentenparameter mindestens eines der Folgenden beinhalten:

Einwiderstand der mindestens einen Schalteinrichtung (Q);

Gesamtenergieaufnahme der mindestens einen Schalteinrichtung (Q);
Anstiegszeit der mindestens einen Schalteinrichtung (Q);
Abfallzeit der mindestens einen Schalteinrichtung (Q);
sicheres Betriebsbereich der mindestens einen Schalteinrichtung (Q);
thermischer Widerstand der mindestens einen Schalteinrichtung (Q);
Leitungsverluste der mindestens einen Schalteinrichtung (Q); und
Schaltverluste der mindestens einen Schalteinrichtung (Q).

6. Schaltnetzteil (200) nach Anspruch 4, wobei die vorherigen und/oder aktuellen Betriebsbedingungen mindestens eines der Folgenden beinhalten:

vorheriger Ein/Aus Zustand der mindestens einen Schalteinrichtung (Q);
aktueller Ein/Aus Zustand der mindestens einen Schalteinrichtung (Q);
Schaltfrequenz der mindestens einen Schalteinrichtung (Q);
Ausgangsspannung des Leistungsstrangs (230),
Umgebungstemperatur,
Temperatur der mindestens einen Schalteinrichtung (Q);
eine Temperatur innerhalb einer Abdeckung des Schaltnetzteils (200),
vorherige Ausgangsleistung des Leistungsstrangs (230), und
aktuelle Ausgangsleistung des Leistungsstrangs (230), und/ oder
wobei das Stromprofil mindestens eines der Folgenden beinhaltet:

ein nutzerausgewähltes Stromprofil, und
ein werksseitig ausgewähltes Stromprofil.

7. Schaltnetzteil (200) nach Anspruch 1, wobei die Steuerlogik (240) Folgendes aufweist:

einen Datenspeicher (260), der konfiguriert ist zum Speichern von Daten; und
einen Prozessor (250), der konfiguriert ist zum Berechnen des äquivalenten Stroms zumindest teilweise basierend auf den gespeicherten Daten.

8. Schaltnetzteil (200) nach Anspruch 7, wobei die gespeicherten Daten Folgendes beinhalten:

Spannung über der mindestens einen Induktivität (L),
eine parametrisierte Magnetisierungskurve entsprechend der mindestens einen Induktivität (L), und
Einschaltdauer der mindestens einen Schaltvorrichtung (Q), und
wobei der Prozessor (250) konfiguriert ist zum Berechnen des äquivalenten Stroms zumindest teilweise basierend auf der Spannung über der mindestens einen Induktivität (L), der parametrisierten Magnetisierungskurve entsprechend der mindestens einen Induktivität (L), und der Einschaltdauer der mindestens einen Schaltvorrichtung (Q).

9. Schaltnetzteil nach Anspruch 7, wobei der Prozessor (250) konfiguriert ist zum Veranlassen des Schaltens der mindestens einen Schaltvorrichtung mit einer Frequenz zumindest teilweise basierend auf dem berechneten Strom.

10. Schaltnetzteil nach Anspruch 7, wobei der Prozessor (250) konfiguriert ist zum Veranlassen, dass die mindestens eine Schalteinrichtung (Q) ausschaltet, und zwar basierend darauf, dass der berechnete Strom einen Strombegrenzungsschwellenwert oberhalb des Strommessbereichs des Prozessors erreicht oder überschreitet, und zum Veranlassen, dass die mindestens eine Schalteinrichtung (Q) einschaltet, und war zumindest teilweise basierend darauf, dass der berechnete Strom unter einen zweiten Schwellenwert abfällt, der über oder unter den Strommessbereich des Prozessors liegt.

11. Ein Verfahren (400) zum Steuern eines Schaltnetzteils (200), wobei das Verfahren Folgendes aufweist:

Berechnen (410) eines Induktionsstroms durch mindestens eine Induktivität (L) in dem Schaltnetzteils (200);
Ausschalten (430) mindestens einer Schalteinrichtung (Q) basierend darauf, dass der berechneten Induktionsstroms einen Strombegrenzungsschwellenwert erreicht, der über dem Strommessbereich der Steuerlogik (240) gesetzt ist; und
Einschalten der mindestens einen Schalteinrichtung (Q) basierend darauf, dass der berechnete Induktionsstrom unterhalb eines zweiten Schwellenwerts entsprechend einer Hysterese des Strombegrenzungsschwellenwerts ist.

**12.** Verfahren nach Anspruch 11, das ferner Folgendes aufweist:

Empfangen von Daten, die mindestens eines der Folgenden repräsentieren:

(a) Komponentenparameter von Komponenten des Schaltnetzteils, und
(b) einen oder mehrere vorherige und aktuelle Betriebszustände des Schaltnetzteils; und

Bestimmen des Strombegrenzungsschwellenwerts basierend auf den empfangenen Daten.

**13.** Verfahren nach Anspruch 12, wobei die einen oder mehreren der mindestens einen der vorherigen und aktuellen Betriebsbedingungen des Schaltnetzteils mindestens eines der Folgenden beinhalten:

vorheriger Ein/Aus Zustand der mindestens einen Schalteinrichtung;
gegenwärtiger Ein/Aus Zustand der mindestens einen Schalteinrichtung;
Schaltfrequenz des Schaltnetzteils,
Ausgangsspannung des Schaltnetzteils,
Temperatur der mindestens einen Schalteinrichtung (Q), Umgebungstemperatur,
eine Temperatur innerhalb einer Abdeckung des Schaltnetzteils,
vorherige Ausgangsleistung des Schaltnetzteils, und
aktuelle Ausgangsleistung des Schaltnetzteils.

**14.** Verfahren nach Anspruch 12,
wobei die Komponentenparameter mindestens eines der Folgenden beinhalten:

Einwiderstand der mindestens einen Schalteinrichtung, Gesamtenergieaufnahme der mindestens einen Schalteinrichtung, Anstiegszeit der mindestens einen Schalteinrichtung, Abfallzeit der mindestens einen Schalteinrichtung, sicherer Betriebsbereich der mindestens einen Schalteinrichtung; thermischer Widerstand der mindestens einen Schalteinrichtung, Leitungsverluste der mindestens einen Schalteinrichtung; und Schaltverluste der mindestens einen Schalteinrichtung, Induktanz der mindestens einen Induktivität.

**15.** Verfahren nach Anspruch 11, das ferner Folgendes aufweist:

Empfangen von Daten, die ein nutzerausgewähltes Stromprofil repräsentieren; und
Bestimmen eines Strombegrenzungsschwellenwerts zumindest teilweise basierend auf den Daten, die das nutzerausgewählte Stromprofil repräsentieren, und /oder Folgendes ausweist:

Empfangen von Daten, die ein werksseitig gewähltes Stromprofil repräsentieren; und
Bestimmen eines Strombegrenzungsschwellenwerts, zumindest teilweise basierend auf den Daten, die das werksseitig gewählte Stromprofil repräsentieren.

## Revendications

**1.** Alimentation à découpage (200) comprenant :

un accès d'entrée (210) ;
un accès de sortie (220) ;
une chaine d'alimentation (230) connectée fonctionnellement à l'accès d'entrée (210) et à l'accès de sortie (220), la chaine d'alimentation (230) comprenant au moins une inductance (L) et au moins un dispositif de commutation (Q) ; et
une logique de commande (240) agencée pour calculer périodiquement un courant équivalent au courant dans ladite au moins une inductance (L) et agencée en outre pour contrôler le fonctionnement de la chaine d'alimentation (230) au moins en partie en commutant ledit au moins un dispositif de commutation (Q) sur la base au moins en partie du courant équivalent calculé ;
dans laquelle la logique de commande (240) est agencée pour faire en sorte que ledit au moins un dispositif de commutation (Q) soit non passant sur la base au moins du fait que le courant calculé atteigne ou dépasse un seuil de limite de courant qui est réglé au-dessus d'une plage de mesure de courant de la logique de commande (240), et pour faire en sorte que ledit au moins un dispositif de commutation (Q) soit passant sur la base au moins en partie du fait que le courant calculé descende en dessous d'un deuxième seuil correspondant à une hystérésis du seuil de limite de courant.

2. Alimentation à découpage (200) selon la revendication 1, dans laquelle la logique de commande (240) est agencée pour calculer le courant équivalent sur la base en partie d'une courbe d'aimantation correspondant à ladite au moins une inductance (L).

3. Alimentation à découpage (200) selon la revendication 1, dans laquelle la logique de commande (240) est agencée pour calculer le courant équivalent sur la base en partie d'au moins l'un des éléments suivants :

   l'inductance de ladite au moins une inductance (L) ; et
   l'inductance en saturation de ladite au moins une inductance (L).

4. Alimentation à découpage (200) selon la revendication 1, dans laquelle la logique de commande (240) est agencée pour calculer le seuil de limite de courant sur la base d'au moins l'un des éléments suivantes :

   des paramètres de composants de la chaine d'alimentation (230),
   au moins l'une des conditions de fonctionnement antérieure et courante de la chaine d'alimentation (230), et
   un profil de courant.

5. Alimentation à découpage (200) selon la revendication 4, dans laquelle les paramètres de composants comprennent au moins l'un des éléments suivantes :

   la résistance à l'état passant dudit au moins un dispositif de commutation (Q) ;
   la capacité totale en énergie dudit au moins un dispositif de commutation (Q) ;
   le temps de montée dudit au moins un dispositif de commutation (Q) ;
   le temps de descente dudit au moins un dispositif de commutation (Q) ;
   la région de fonctionnement en sécurité dudit au moins un dispositif de commutation (Q) ;
   la résistance thermique dudit au moins un dispositif de commutation (Q) ;
   les pertes de conduction dudit au moins un dispositif de commutation (Q) ; et
   les pertes de commutation dudit au moins un dispositif de commutation (Q).

6. Alimentation à découpage (200) selon la revendication 4, dans laquelle ladite au moins une des conditions de fonctionnement antérieure et courante comprend au moins l'une des conditions suivantes :

   l'état antérieur passant/non passant dudit au moins un dispositif de commutation (Q),
   l'état courant passant/non passant dudit au moins un dispositif de commutation (Q),
   la fréquence de commutation dudit au moins un dispositif de commutation (Q),
   la tension de sortie de la chaine d'alimentation (230),
   la température ambiante,
   la température dudit au moins un dispositif de commutation (Q),
   la température à l'intérieur d'une enceinte de l'alimentation à découpage (200),
   la charge de sortie antérieure de la chaine d'alimentation (230), et
   la charge de sortie courante de la chaine d'alimentation (230) ; et/ou
   dans laquelle le profil courant comprend au moins l'un des profils suivantes :

      un profil courant sélectionné par un utilisateur ; et
      un profil courant sélectionné en usine.

7. Alimentation à découpage (200) selon la revendication 1, dans laquelle la logique de commande (240) comprend :

   un stockage de données (260) agencé pour mémoriser des données ; et
   un processeur (250) agencé pour calculer le courant équivalent sur la base au moins en partie des données mémorisées.

**8.** Alimentation à découpage (200) selon la revendication 7,
dans laquelle les données mémorisées comprennent :

la tension aux bornes de ladite au moins une inductance (L),
une courbe d'aimantation paramétrée correspondant à ladite au moins une inductance (L), et
le temps de passage à l'état passant dudit au moins un dispositif de commutation (Q), et
dans laquelle le processeur (250) est agencé pour calculer le courant équivalent sur la base au moins en partie
de la tension aux bornes de ladite au moins une inductance (L), de la courbe d'aimantation paramétrée correspondant à ladite au moins une inductance (L), et du temps de passage à l'état passant dudit au moins un
dispositif de commutation (Q).

**9.** Alimentation à découpage selon la revendication 7, dans laquelle le processeur (250) est agencé pour faire que la
commutation dudit au moins un dispositif de commutation se fasse à une fréquence basée au moins en partie sur
le courant calculé.

**10.** Alimentation à découpage selon la revendication 7, dans laquelle le processeur (250) est agencé pour faire en sorte
que ledit au moins un dispositif de commutation (Q) soit non passant sur la base du fait que le courant calculé
atteigne ou dépasse le seuil limite de courant au-dessus de la plage de mesure de courant du processeur, et pour
faire en sorte que ledit au moins un dispositif de commutation (Q) soit passant sur la base au moins en partie du
fait que le courant calculé descende en dessous d'un deuxième seuil, qui est supérieur ou inférieur à la plage de
mesure de courant du processeur.

**11.** Procédé (400) de commande d'une alimentation à découpage (200), le procédé comprenant :

calculer (410) un courant d'inductance dans au moins une inductance (L) dans l'alimentation à découpage (200) ;
commuter (430) au moins un dispositif de commutation (Q) à l'état non passant sur la base du fait que le courant
d'inductance calculé atteigne un seuil de limite de courant qui est réglé au-dessus d'une plage de mesure
courante de la logique de commande (240) ; et
commuter ledit au moins un dispositif de communication (Q) à l'état passant sur la base du fait que le courant
d'inductance calculé soit en dessous d'un deuxième seuil correspondant à une hystérésis du seuil de limite de
courant.

**12.** Procédé selon la revendication 11, comprenant en outre :

recevoir des données représentant au moins l'un des éléments suivantes :

(a) des paramètres de composants de l'alimentation à découpage, et
(b) un ou plusieurs états parmi l'état de fonctionnement antérieur et courant de l'alimentation à découpage ; et

déterminer le seuil de limite de courant sur la base des données reçues.

**13.** Procédé selon la revendication 12, dans lequel lesdites une ou plusieurs desdites au moins une condition de
fonctionnement antérieur et courante de l'alimentation à découpage comprennent au moins l'un des éléments
suivantes :

l'état passant/non passant antérieur dudit au moins un dispositif de commutation,
l'état passant/non passant courant dudit au moins un dispositif de commutation,
la fréquence de commutation de l'alimentation à découpage,
la tension de sortie de l'alimentation découpage,
la température dudit au moins un dispositif de commutation, la température ambiante,
une température intérieure d'une enceinte de l'alimentation à découpage,
la charge de sortie antérieure de l'alimentation à découpage, et
la charge de sortie courante de l'alimentation à découpage.

**14.** Procédé selon la revendication 12,
dans lequel les paramètres des composants comprennent au moins un élément parmi la résistance à l'état passant
dudit au moins un dispositif de commutation, la capacité totale en énergie dudit au moins un dispositif de commutation,
le temps de montée dudit au moins un dispositif de commutation, le temps de descente dudit au moins un dispositif de commutation, la région de fonctionnement en sécurité dudit au moins un dispositif de commutation, la résistance thermique dudit au moins un dispositif de commutation, les pertes de conduction dudit au moins un dispositif de commutation, et les pertes de commutation dudit au moins un dispositif de commutation, et l'inductance de ladite au moins une inductance.

15. Procédé selon la revendication 11, comprenant en outre :

recevoir des données représentant un profil courant sélectionné par un utilisateur ; et
déterminer le seuil de limite de courant sur la base au moins en partie des données représentant le profil courant sélectionné par l'utilisateur, et/ou comprenant :

recevoir des données représentant un profil courant sélectionné en usine ; et
déterminer le seuil de limite de courant sur la base au moins en partie des données représentant le profil courant sélectionné en usine.

Prior Art

**Figure 1**

200

210

220

230
Power
Train

240
Control
Logic

**Figure 2**

200

210

220

230

$+$ $V_L$ $-$

CS

Q

L

$I_L$

+

Vin

-

C1

D

C2

+

Vout

-

Control Logic
240

PWM

$I_L$

Processor
250

$V_{out}$

$V_{in}$

Data
Store
260

**Figure 3**

400

Start

410 — Calculate Inductor Current

420 — Has Calculated Inductor Current Reached Current Limit Threshold?

No

Yes

430 — Turn Off Switch

**Figure 4**

**Figure 5**

Figure 6

**Figure 7**

**Figure 8**

**Figure 9**

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004178783 A
- US 6100676 A

- US 7205875 B, Oughton, Jr.

**Non-patent literature cited in the description**

- **BRYAN A. GARNER.** A Dictionary of Modern Legal Usage. 1995, 624